# EUROPEAN PATENT SPECIFICATION

(11) **EP 3 618 646 B1**
(45) Date of publication and mention of the grant of the patent: **04.10.2023**
(21) Application number: 18723918.1
(22) Date of filing: 02.05.2018
(51) Int. Cl.: A23P 20/18, A23P 20/13

(54) **APPARATUS AND METHOD FOR COATING PRODUCT IN FLAVOURING**
VORRICHTUNG UND VERFAHREN ZUR BESCHICHTUNG EINES PRODUKTS IN GESCHMACKSSTOFF
APPAREIL ET PROCÉDÉ DESTINÉS À ENROBER UN PRODUIT D'UN AROMATISANT

(30) Priority: 02.05.2017 GB 201706967
(43) Date of publication of application: 11.03.2020
(73) Proprietor: Ishida Europe Limited, Birmingham, West Midlands B32 3DB (GB)
(72) Inventor: VINE, Lee, Lytchett Matravers Dorset BH16 6EL (GB)
(74) Representative: Gill Jennings & Every LLP
(86) International application number: PCT/GB2018/051167
(87) International publication number: WO 2018/203050

(56) References cited:
- JP-A- 2004 000 020
- JP-A- 2004 166 621
- US-A- 4 797 004
- US-A- 5 721 000
- US-A1- 2004 231 299

## Description

### FIELD OF THE INVENTION

The present invention relates to apparatuses and methods for coating product in flavouring. In particular, the invention relates to apparatuses and methods for coating solid food product, such as meat or potato crisps, in flavourings, which may include liquid flavourings, such as marinades or sauces, or particulate flavourings, such as powders or salt.

### BACKGROUND TO THE INVENTION

Product coated in flavouring is typically divided into portions for retail that, depending upon the region of sale of the product, must meet strict criteria as to the actual weight of the portion versus the advertised weight. In order to ensure these weight requirements are met, it has typically been the case that product is coated in flavouring in large batches and then conveyed to packaging equipment where the flavoured product is weighed, divided into portions of the desired weight and packed. Processing in this way means that the conveying and weighing equipment become coated in flavouring. A significant problem with this is that when the type of flavouring used is to be changed, all parts of the apparatus that have been in contact with the flavouring must be removed and cleaned, which is very time consuming and expensive. In order to overcome this problem, there have been attempts to perform coating of product in flavouring after separately measuring an individual portion of product and an individual dose of flavouring.

Methods that coat individual portions of product in flavouring must contend with a major issue which is that the whole portion of product and as much of the flavouring as possible must be reliably kept together from the point of introduction to the point of packaging to ensure that the weight criteria for the packaged flavoured portion is met.

Examples of coating apparatuses known in the art may be found in WO 02/41715 A2 and EP 1424284 A2. The former discloses an apparatus for coating product in flavouring in which product and flavouring are introduced into a rotatable drum, which is rotated to coat the product in the flavouring. This coating apparatus relies on gravity to empty a flavouring receptacle, which can lead to sticky product, such as meat, not being properly discharged, thereby resulting in one batch being underweight and the subsequent batch being overweight. The latter discloses an apparatus for coating product in flavouring in which product is moved along a conveyor by a helical blade and flavouring introduced at locations along the conveyor. Since the helical blade moves product along a trough to coat in flavouring, the amount of flavouring coating the product at the end can vary significantly. In particular, flavouring from various batches comes to coat the length of the trough, making the total amount of flavouring coating the product difficult to control. Further, if product becomes stuck to one of the blades, it can be transferred into an upstream portion, again leading to one underweight and one overweight portion of product.

Another example of a flavouring apparatus is disclosed in JP 2004 000020 A.

It is desirable to provide an apparatus for coating portion sized batches of product in flavouring that consistently meets criteria, such as a target weight, and efficiently uses flavouring by reliably keeping a dose of flavouring with the corresponding portion of product.

### SUMMARY OF THE INVENTION

In accordance with a first aspect of the invention, there is provided a flavouring apparatus for coating product in flavouring comprising: a flavouring receptacle configured for receiving a portion of product and a dose of flavouring, the flavouring receptacle comprising: an open first end arranged to receive the portion of product in use, a peripheral sidewall at least partly defining a flavouring volume extending from the first end of the flavouring receptacle, the flavouring volume for receiving the portion of product and dose of flavouring, and an ejecting member movable relative to the peripheral sidewall through the flavouring volume towards the first end for ejecting a flavoured portion of product out of the flavouring volume through the first end of the flavouring receptacle; and a drive system configured to rotate at least the peripheral sidewall of the flavouring receptacle so as to cause mixing of the portion of product and the dose of flavouring in the flavouring volume; wherein, in use, the flavouring receptacle is arranged such that the portion of product and the dose of flavouring are retained in the flavouring volume during rotation of the peripheral sidewall, wherein the ejecting member is configured to move in a reciprocating fashion from a first position, adopted during mixing of the product and flavouring, to a second position proximate the first end of the flavouring receptacle for ejecting flavoured product.

The apparatus according to the invention provides a reliable and efficient means of mixing a known amount of product and a known amount of flavouring in portion-sized quantities, i.e. after measuring separately. A flavouring receptacle can be configured to receive an amount of product and an amount of flavouring whose total weight, for example, meets weight criteria of the target flavoured product. The positive ejection means of the present invention ensures that all of the product is reliably ejected and that the amount of lost flavouring, e.g. flavouring retained in the flavouring receptacle, is minimised. Accordingly, batches of flavoured product can be produced that reliably meet criteria, such as a target weight.

The term product is intended to cover any portion of food product made up of one or more discrete pieces, in particular food pieces such as meat, fish or poultry portions, potato crisps (or potato chips), or corn crisps. The term flavouring is intended to cover any material suitable for coating product. In particular, the term covers solid granular flavourings, such as salt or powdered flavourings, as well as liquid flavourings such as sauces or marinades.

The peripheral sidewall of the flavouring receptacle at least partly defines a flavouring volume, by which it is meant that the sidewall defines a flavouring volume either on its own or in combination with one or more further surfaces of the flavouring receptacle, as will be described below.

In use, the flavouring receptacle is arranged such that the portion of product and the dose of flavouring are retained in the flavouring volume during rotation of the peripheral sidewall. Typically, this will be achieved by providing that the first end is arranged so as to be higher than and laterally offset from the flavouring volume over a full rotation, so that the product and flavouring are retained in the flavouring volume by gravity. In other cases, the sidewall may be shaped to retain product and flavouring; for example the first end may be provided at substantially the same height of the flavouring volume, while the sidewall may bow outwards so that product and flavouring are retained owing to the shape of the sidewall.

Performing coating of product in flavouring after weighing or otherwise determining the amount of product and flavouring can be a time-consuming process, especially where the batches are small compared to the total amount of product being processed. In order to maintain a high throughput of product and flavouring, preferably the apparatus comprises a plurality of flavouring receptacles configured for receiving respective portions of product and respective doses of flavouring, each flavouring receptacle is composed identically to the first, that is each flavouring receptacle comprises an open first end arranged to receive the portion of product in use, a peripheral sidewall at least partly defining a flavouring volume extending from the first end of the flavouring receptacle, the flavouring volume for receiving the portion of product and dose of flavouring, and an ejecting member movable relative to the peripheral sidewall through the flavouring volume towards the first end for ejecting a flavoured portion of product out of the flavouring volume through the first end of the flavouring receptacle, and the drive system is configured to rotate at least the peripheral sidewalls of each of the flavouring receptacles so as to cause mixing of the respective portions of product and the respective doses of flavouring and wherein, in use, the portion of product and the dose of flavouring are retained in the flavouring volume during rotation of the peripheral sidewall. Such a system maintains the reliability and efficiency inherent to a system comprising a flavouring receptacle dedicated to an individual batch of product with a positive ejecting means, but allows the system to be scaled to accommodate any high throughput requirements.

A second aspect of the invention relates to a system according to claim 14, which will be discussed further below. While it is possible that the above apparatus of the first aspect could be used in a system which delivers portions of product to each of the flavouring receptacles at their respective positions, in many cases, the apparatus will need to be integrated into systems having existing weighing and product delivery means, which in some cases deliver product to a single, fixed product delivery position. Accordingly, preferably the apparatus further comprises a transport system configured to move each of the plurality of flavouring receptacles sequentially to a product delivery position for receiving a portion of product. Such a system provides the advantages described above resulting from the plurality of separate flavouring receptacles while maintaining a good ability for integration with existing product portioning and delivery apparatuses.

While moveable flavouring receptacles is preferable, the apparatus according to the first aspect could alternatively, for example, be provided with an integrated product distribution system configured to receive a portion of product at a product delivery position and transport said portion of product to one of a plurality of flavouring receptacle positions, for delivery into each of the flavouring receptacles.

It is also likely that the apparatus according to the first aspect will need to be integrated into a system having existing downstream processing means, such as a packaging machine, and such a system will typically be configured to receive flavoured product at a single, fixed position. Accordingly, preferably the apparatus further comprises a transport system configured to move each of the plurality of flavouring receptacles sequentially to a product ejection position at which the flavoured portion of product is ejected. Such a system provides the advantages described above resulting from the plurality of separate flavouring receptacles while maintaining a good ability for integration with existing downstream processing apparatuses. Typically, the apparatus will move each of the plurality of flavouring receptacles sequentially from a product delivery position to a product ejection position. In these cases, preferably a single transport system is provided, which moves the plurality of flavouring receptacles sequentially between those positions.

In particularly preferable embodiments, the transport system is configured to move each of the plurality of flavouring receptacles along a path defining a closed loop. Providing that the flavouring receptacles move along a path defining a closed loop is a particularly efficient way of ensuring a repeatable sequence in which each flavouring receptacle is moved to the product delivery position in turn. It can also simplify construction of the transport system, especially where the closed loop path is, for example, a circular path, or where the flavouring receptacles are otherwise made to rotate about a common axis. In a particularly preferable example, the transport system and the drive system are provided by a planetary gear train. For example, the flavouring receptacles may be mounted on the planet gears of a planetary gear train and made to move around a closed loop by the translational movement of the planetary gears and made to rotate by the rotational movement of the planetary gears.

Where the apparatus also transports the flavouring receptacles to a product ejection position, the product delivery position may be located at a first position along the closed loop and the product ejection position at a second location along the closed loop. Flavouring time for each individual batch may be increased by increasing the proportion of a full cycle of the closed loop between the product delivery position (or flavouring delivery position, if later) and the product ejection position. For example, the product ejection position (or flavouring delivery position) may be separated from the product delivery position by at least 50% of the duration and/or distance of a full cycle of the closed loop path, and more preferably by at least 75%.

In some embodiments, the transport system is configured to continuously move the plurality of flavouring receptacles about the closed loop path, by which it is meant that the plurality of flavouring receptacles are constantly in motion during operation, e.g. at a constant speed. However, alternatively, the transport system may be configured to move the plurality of flavouring receptacles in an indexed motion, i.e. one in which the flavouring receptacles stop briefly at a number of predefined positions, which may include the product delivery position and product ejection position, among others. Continuous motion is particularly preferable as the combined mass of multiple drums and product portions creates a high inertia and continuous motion maximises the ability of the system to cope with this inertia. In contrast, indexing such a heavy load requires high torque and a large transport system and would place more strain on the mechanical components of the system. Further preferably, the drive system is configured to substantially continuously rotate at least the sidewall of the flavouring receptacle. Continuous motion and continuous rotation can be achieved, in particular, when the transport system and the drive system are provided by a planetary gear train.

Preferably, rotation of at least the flavouring receptacle sidewall is performed at no more than 100 rpm, preferably no more than 75 rpm, further preferably no more than 50 rpm. High rotation speeds mean sticky product, such as meat, can be held to the flavouring receptacle sidewall by centrifugal force. Where a planetary gear train is used, continuous motion of the flavouring receptacles maximises throughput and efficiency as the system can run at this maximum rotation speed all of the time.

Providing additional flavouring receptacles will only increase throughput up to a point at which the time taken to deliver a portion of product to each flavouring receptacle is greater than the mixing time required for an amount of product to be sufficiently coated in flavouring. Adding further flavouring receptacles beyond this point will only increase the available flavouring time or lead to increasing downtime between product ejection and subsequent product delivery for each flavouring receptacle. Further, in some cases, the time taken to deliver a portion of product to each flavouring receptacle may be limited by a maximum speed at which the flavouring receptacles can be moved to the product delivery position, which can mean that the full throughput of the product delivery system is not being utilised. In order to further improve throughput, preferably the plurality of flavouring receptacles form a first set of flavouring receptacles and the apparatus further comprises a second set of flavouring receptacles, wherein the transport system is configured to move each of the second set of flavouring receptacles sequentially to a second product delivery position for receiving a portion of product. Such embodiments advantageously allow throughput to be further increased. It will be appreciated that each of the second set of flavouring receptacles will typically be constructed identically to the flavouring receptacles described above, i.e. comprising a peripheral sidewall and an ejecting member and being arranged in use such that the product and flavouring are retained during mixing. It will also be appreciated that the various preferable features described above with respect to the first set of flavouring receptacles and their transport system apply equally to the second set of flavouring receptacles.

These embodiments may require any associated product portioning and delivery system to be configured to deliver product separately to first and second product delivery positions, or the flavouring apparatus itself may include an integrated product distribution system configured to receive portions of product at a first upstream delivery position and distribute those portions of product to the first and second product delivery positions. Alternatively, in some cases, the apparatus may be configured such that the first set of flavouring receptacles receive product from an associated first product portioning and delivery system, while the second set of flavouring receptacles receive product from an associated second product portioning and delivery system.

Embodiments comprising a second set of flavouring receptacles offer advantages over, for example, running a plurality of apparatuses in parallel in that the first and second set of receptacles can, for example, share a transport system, drive system or control system to reduce manufacturing and operating costs.

As has been mentioned above, the sidewall may only partly define the flavouring volume. In some cases, the or each flavouring receptacle further comprises a (preferably substantially closed) base, wherein the peripheral sidewall extends between the first end and the base, thereby defining the flavouring volume. In these cases, preferably the or each flavouring receptacle is mounted such that, in use, the first end of the flavouring receptacle is arranged above and laterally offset from the base.

For a simplified construction, preferably the peripheral sidewall of the or each flavouring receptacle defines a flavouring volume having a substantially constant cross-section. Further, in order to ensure ejection of substantially all of the product and flavouring in a flavouring receptacle, preferably, the ejecting member has a shape that substantially matches the cross-section of the flavouring volume. In this way, the ejecting member sweeps through substantially the entire flavouring volume during the ejection process. This can help, in particular, when sticky product such as meat is flavoured in the flavouring receptacle, which may become stuck on the sidewall rather than collect at the bottom of the flavouring volume. On the other hand, where nonsticky product is flavoured, such as dried food including potato crisps, sufficient product ejection may be achieved by an ejecting member which only sweeps through a lower region of the flavouring volume.

In some embodiments, the ejecting member of the or each flavouring receptacle forms at least part of the base. Particularly preferably, the ejecting member forms substantially all of the base, thereby providing a moveable base to the flavouring receptacle. These embodiments may have a simplified construction and this may lead to a reduction in the total surface area of the flavouring receptacle, which reduces the time and labour required to clean the flavouring receptacle, for example, between changes of product and/or flavouring.

Preferably the peripheral sidewall of the or each flavouring receptacle is substantially cylindrical so as to define a substantially cylindrical flavouring volume. These embodiments may define drum-shaped flavouring receptacle, which is a particularly preferable configuration of flavouring receptacle as it generates a particularly efficient mixing motion of the contents of the flavouring receptacle. While a cylindrical sidewall is preferable, alternatively shaped sidewalls are foreseen, such as those that define a flavouring volume with a pentagonal or hexagonal cross-section, or other higher order regular polygonal cross-sections.

In some embodiments, there is provided a flavouring reservoir for holding flavouring in use, wherein the or each flavouring receptacle comprises a flavouring aperture disposed in one of the peripheral sidewall and the base, wherein movement of the ejecting member relative to the peripheral sidewall is performed by moving the peripheral sidewall and, if provided, the base between a first position, adopted during mixing of the product and flavouring, e.g. proximate the base of the flavouring receptacle, and a second position, in which the ejecting member is proximate the first end of the flavouring receptacle, and wherein in the second position, the peripheral sidewall or the base is at least partly received in the flavouring reservoir such that flavouring passes through the flavouring aperture and into the flavouring volume. These embodiments do not require an active flavouring delivery means and may decrease the cost of the apparatus. Further, these embodiments advantageously make use of the relative motion of the ejecting member and the sidewall to simultaneously eject a first batch of flavoured product and receive a new dose of flavouring, which can help speed up one cycle of the apparatus and improve throughput.

Preferable embodiments are provided with a flavouring dispenser arranged to dispense a measured dose of flavouring at least at one flavouring delivery position for receipt in the or each flavouring receptacle via the first end of the flavouring receptacle. These embodiments provide for very precise control of the amount of flavouring being introduced to the flavouring receptacle with each portion of product and further do not require complex injection means for introducing flavouring at another location of the flavouring receptacle. In embodiments comprising a plurality of flavouring receptacles movable to a product delivery position, the flavouring delivery position may be substantially the same as the product delivery position such that the product and flavouring are introduced concurrently. Alternatively, the transport system may move each flavouring receptacle to one position and then the other. For example, in the closed loop embodiments, one position may be located upstream of the other such that the product and flavouring are sequentially introduced into the flavouring receptacle.

While typically the rotation of the sidewall of a flavouring receptacle will cause sufficient mixing of product and flavouring as product tumbles within the rotating flavouring receptacle, it may be desirable to further agitate the product and flavouring in the flavouring receptacle in order to promote better coating of the product. Therefore, preferably the peripheral sidewall of the or each flavouring receptacle comprises at least one projecting member that projects into the flavouring volume for agitating the portion of product and the dose of flavouring during mixing by rotation of the peripheral sidewall of the flavouring receptacle. The projecting member may, for example, be a rib extending between the first end the base of the flavouring receptacle; however, other projecting members are envisaged. Typically, a plurality of projecting members will be provided about the internal surface of the peripheral sidewall such that a full rotation of the sidewall agitates the portion of product a plurality of times.

The flavouring receptacles of the present apparatus are preferably arranged in use such that the first end is above and laterally offset from the base and such that the peripheral sidewall is generally inclined with respect to the horizontal. Here, there is a balancing between having the first end above the base such that product and flavouring is retained in the flavouring receptacle during mixing on the one hand, and the improved mixing that results the more the product is in contact with the rotating sidewall rather than, for example, a rear wall of the flavouring receptacle on the other. Preferably, the or each flavouring receptacle is mounted such that, in use, an axis passing through a centre of the first end and a centre of the base makes an angle of no more than 45° to the horizontal, preferably no more than 30° to the horizontal, such that product and flavouring in the flavouring volume are supported by the peripheral sidewall during mixing. This has been found to result in particularly good mixing while ensuring product is retained in the flavouring receptacle. Alternatively, the peripheral sidewall of the or each flavouring receptacle may be shaped such that, in use, the peripheral sidewall is generally inclined at an angle of no more than 45° to the horizontal, preferably no more than 30° to the horizontal, such that product and flavouring in the flavouring volume are supported by the peripheral sidewall during mixing.

Preferably, the drive system is configured to rotate at least the peripheral sidewall of the or each flavouring receptacle about an axis that passes through the first end and the base of the flavouring receptacle, preferably about an axis that passes substantially through a centre of the first end and a centre of the base of the flavouring receptacle. Preferably, the drive system may be configured such that rotation of the peripheral sidewall is performed substantially without any translational movement of the first end and the base of the flavouring receptacle. Preferably, for any type of rotation, the first end of the flavouring receptacle remains above the base of the flavouring receptacle over a complete rotation cycle.

The or each ejecting member is configured to move in a reciprocating fashion from a first position, adopted during mixing of the product and flavouring, to a second position proximate the first end of the flavouring receptacle for ejecting flavoured product. A reciprocating motion is a particularly advantageous way of implementing the ejection action as it simplified construction, allowing use, for example, of a simple actuator for actuating the ejection member.

Preferably the flavouring apparatus automatically moves the ejecting member to cause ejection of the flavoured portion of product and therefore preferably the apparatus further comprises an actuating system arranged to actuate the ejecting member of the or each flavouring receptacle. For example, the actuating system may comprise a fixed pneumatic or hydraulic actuator and the actuator may be arranged to cooperate with the ejecting member of the flavouring receptacle located at the ejection position. Alternatively, the actuating system may comprise a fixed pneumatic or hydraulic actuator for each flavouring receptacle, those actuators being moved together with the flavouring receptacles. This automation may decrease operating costs and increase throughput. While an actuating system is preferable, it is also foreseen that movement of an ejecting member could be performed manually.

Preferably, the flavouring apparatus further comprises a control system configured to control one or more of the drive system, the transport system and the actuating system. The inclusion of a control system for controlling one or more functions of the apparatus may advantageously improve operating speed and reduce operating costs. Where the apparatus is integrated into a system for preparing flavoured portions of product, the control system may also control functions of the wider system. For example, the control system may control dispensing of a portion of product by an associated product portioning and delivery system, or may control dispensing of a dose of flavouring.

The flavouring apparatus will typically be used as part of a larger system for preparing flavoured portions of product and therefore, according to a second aspect of the invention there is provided a system for preparing flavoured portions of product comprising the flavouring apparatus described above and further comprising a product portioning apparatus arranged to receive product in bulk and discharge a measured portion of product at least at one product delivery position for receipt in the or each flavouring receptacle. The product portioning apparatus may, for example, be a weighing apparatus for preparing portions of product meeting specific weight criteria. Alternatively, the product portioning apparatus may be a so-called volumetric portioning apparatus for preparing portions of product that satisfy criteria as to volume.

The system will also preferably package those flavoured portions of product and therefore preferably the system further comprises a packaging apparatus arranged to receive and individually package each flavoured portion of product ejected at the product ejection position. The packaging apparatus need not directly receive the flavoured product at the product ejection position and in embodiments one or more timing hoppers are provided between the flavouring apparatus and the packaging apparatus for controlling the supply of the flavoured product into the packaging apparatus.

In accordance with a third aspect of the invention, there is provided a method of coating product in flavouring comprising: providing a portion of product to a flavouring receptacle, the flavouring receptacle comprising an open first end arranged to receive the portion of product in use and a peripheral sidewall at least partly defining a flavouring volume extending from the first end of the flavouring receptacle, the flavouring volume for receiving the portion of product and dose of flavouring; providing a dose of flavouring into the flavouring receptacle; rotating at least the peripheral sidewall of the flavouring receptacle so as to cause mixing of the portion of product and the dose of flavouring in the flavouring receptacle; and ejecting the flavoured product through the first end of the flavouring receptacle by moving an ejecting member through the flavouring volume towards the first end; wherein the flavouring receptacle is arranged such that the portion of product and the dose of flavouring are retained in the flavouring volume during rotation of the peripheral sidewall, wherein the ejecting member is configured to move in a reciprocating fashion from a first position, adopted during mixing of the product and flavouring, to a second position proximate the first end of the flavouring receptacle for ejecting flavoured product.

The method of coating product in flavouring is suitable for implementation using a flavouring apparatus according to the first aspect of the invention. The method provides the same advantages as the flavouring apparatus according to the first aspect of the invention. Each of the preferable features discussed above in relation to the flavouring apparatus may be implemented as part of an equivalent embodiment of the method according to the third aspect, as will be appreciated by those skilled in the art.

### BRIEF DESCRIPTION OF THE DRAWINGS

Embodiments of the invention will now be described with reference to the following drawings, in which:
Figures 1A to 1D show a system for preparing flavoured portions of product comprising a flavouring apparatus according to a first embodiment in first and second perspective views, front view and enlarged cross-section view respectively;
Figures 2A and 2B show part of the flavouring apparatus according to the first embodiment in first and second perspective views respectively;
Figures 3A to 3D show a flavouring receptacle of the flavouring apparatus according to the first embodiment in first a first perspective view, second perspective view, front view and cross-sectional view respectively;
Figure 4 shows a flow diagram illustrating operation of the flavouring apparatus according to the first embodiment; and
Figures 5A to 5C show, schematically, a flavouring apparatus according to a second embodiment in cross-sections at first and second configurations and in front view respectively.

### DETAILED DESCRIPTION

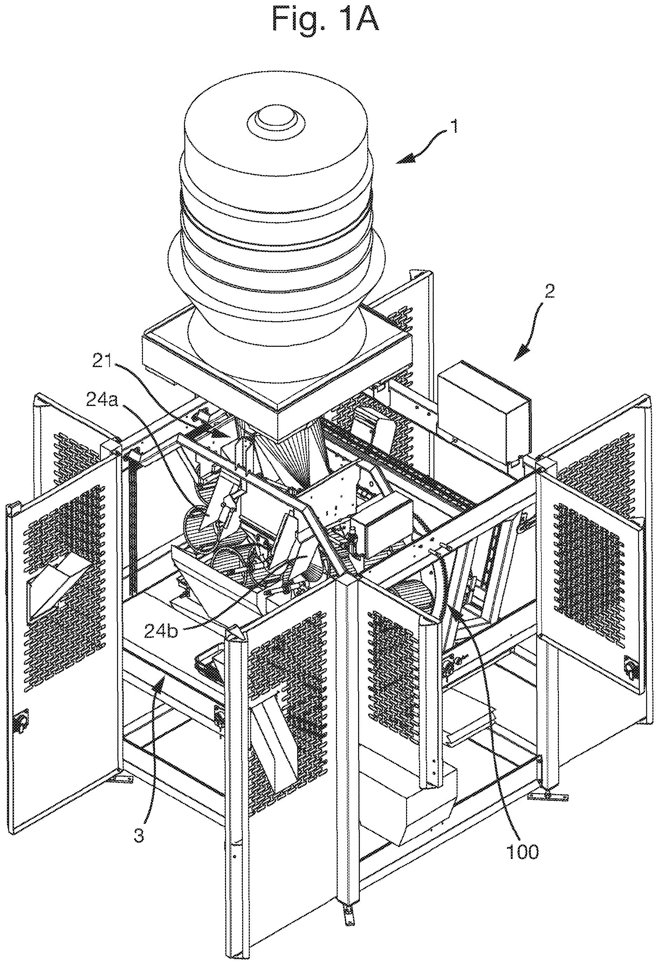

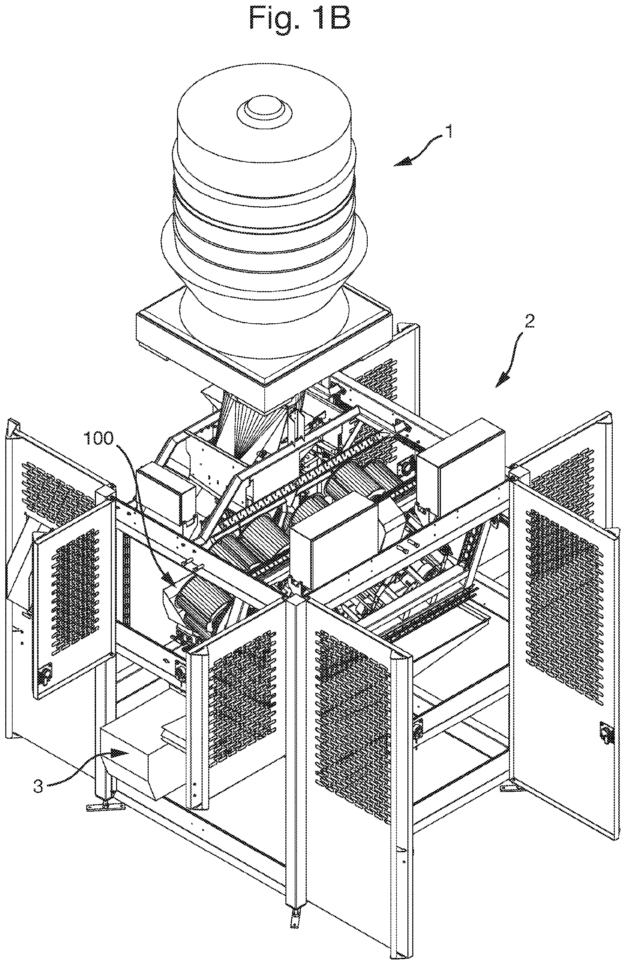

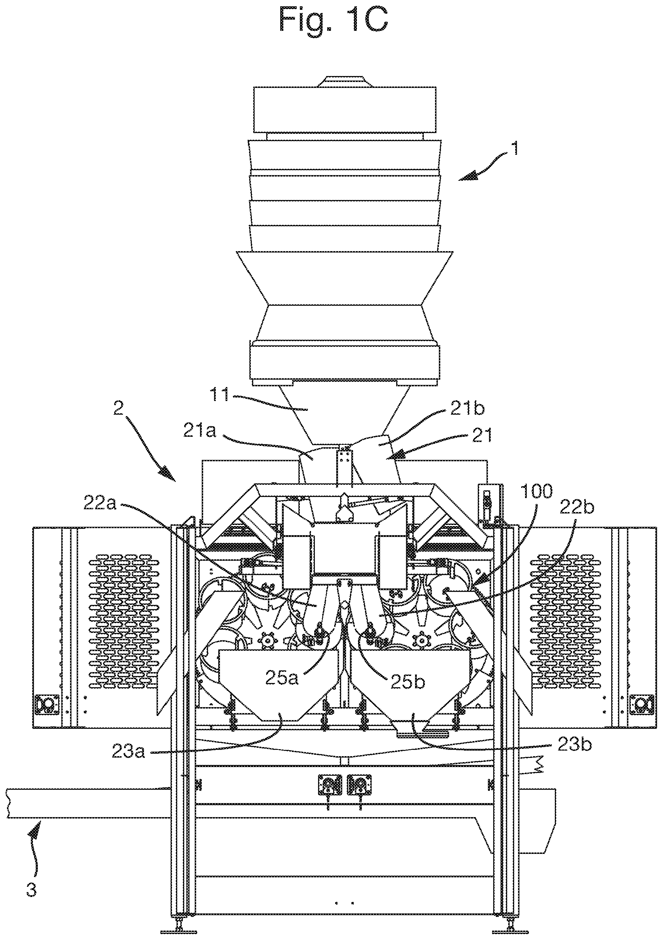

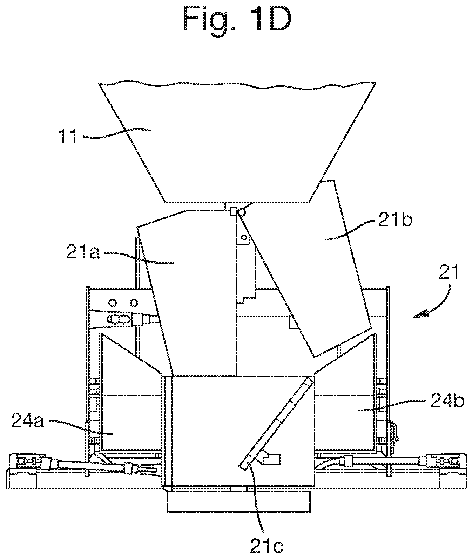

A system for preparing flavoured portions of product is shown in Figures 1A to 1C. This system comprises a product portioning apparatus 1 in the form of a computer combination weigher (CCW) arranged to receive product in bulk and discharge a measured portion of product. The product portioning apparatus feeds into a product flavouring apparatus 2, which receives the portions of product and coats them respectively in flavouring. Finally, flavoured product is discharged from the flavouring apparatus 2 and received on a conveyor belt, for example in trays, for conveying the flavoured product to a downstream packaging machine, such as a heat sealer for sealing the tray. The structure and operation of the product flavouring apparatus 2 will be described in more detail below.

Referring to the interaction between the product portioning apparatus 1 and the product flavouring apparatus 2 in more detail, a portion of product is discharged via a feed chute 11 of the product portioning apparatus 1. In this embodiment, the feed chute 11 is arranged to cooperate with a product distribution system 21 of the product flavouring apparatus 2, which comprises two movable chutes 21a, 21b. The product portioning apparatus 1 is split internally into two independent sections (not shown), the first of which feeds into moveable chute 21a via the feed chute 11 and the second of which feeds into moveable chute 21b via the feed chute 11. The movable chutes 21a, 21b initially both cooperate with the feed chute 11 and are arranged to direct a portion of product towards a diverting gate 21c. If an error (over-weight or under-weight) portion of product is detected in the first or second section of the product portioning apparatus 1, the corresponding moveable chute 21a, 21b swings to a reject position, which aligns the lower end of chute 21a, 21b with a reject chute 24a, 24b, allowing the portion of product to be diverted away from the flavouring apparatus 2, before the moveable chute 21a, 21b moves back to its initial position. The diverting gate 21c is located beneath the moveable chutes 21a, 21b when in their initial position and configured to direct a portion of product to either a first guide 22a or a second guide 22b. The first guide 22a directs a portion of product to a first product delivery position for receipt in one of a first set of flavouring receptacles 110, which will be described in more detail below. The second guide 22b directs a portion of product to a second product delivery position for receipt in one of a second set of flavouring receptacles. Movement of the actuating gate allows either section of the product portioning apparatus 1 to supply either half of the flavouring apparatus, while the moveable chutes permit erroneous portions to be removed from the system. Once a portion of product is provided to the flavouring apparatus, 2 the product is then coated in flavouring in the flavouring receptacle of the flavouring apparatus 2, as will be described further below.

Once the product is coated in flavouring, the product is discharged at a product ejection position. Specifically, the first set of flavouring receptacles 110 each sequentially eject a flavoured portion of product at a first product ejection position into a first downstream guide 23a for guiding product into a tray on the conveyor belt 3 and the second set of flavouring receptacles each sequentially eject a flavoured portion of product at a second product ejection position into a second downstream guide 23b for guiding product into a tray on the conveyor belt.

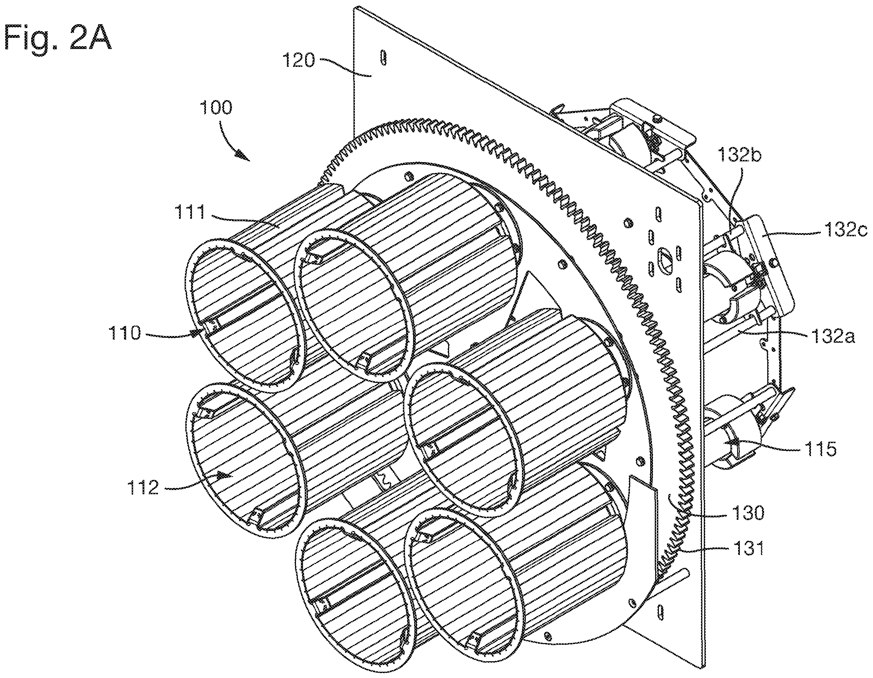

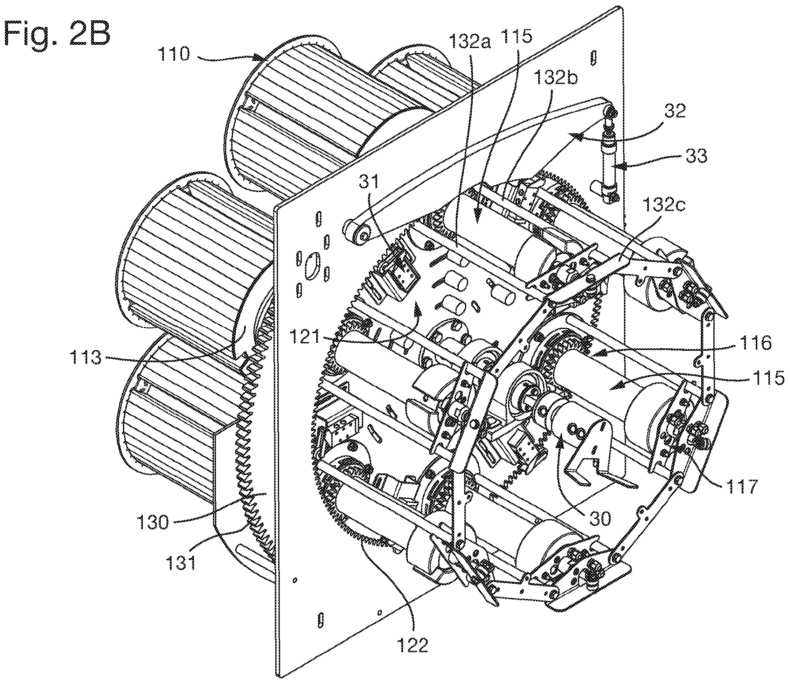

The structure of the flavouring apparatus will now be described with reference to Figures 2A and 2B. Figures 2A and 2B show only a part of the flavouring apparatus; specifically, these figures show flavouring receptacle assembly 100 which provides one of the first set of flavouring receptacles and the second set of flavouring receptacles. Typically, two of these flavouring receptacle assemblies 100 will be mounted side by side to provide the first and second sets of flavouring receptacles of the right and left halves of the flavouring apparatus 2.

The flavouring receptacle assembly 100 comprises a support plate 120 which, during use, is installed into the flavouring apparatus so that the plane of the support plate is inclined away from vertical. The support plate 120 has a generally circular aperture 121 therethrough, the aperture having an array of teeth 122 projecting from the periphery of the aperture 121 towards the centre and being configured to engage with a plurality of gears, as will be described below.

Mounted over the aperture 121 of the support plate 120 is a large circular gear plate 130. The gear plate is mounted concentrically over the aperture 121 and extends beyond the periphery of the aperture. The periphery of the circular gear plate 130 has an array of teeth 131 extending radially outwards. When mounted on the flavouring apparatus 2, the teeth 131 of the gear plate 130 engage with a drive gear (not shown), which drives the gear plate 130 to rotate. In some embodiments, a single drive gear is used to simultaneously drive first and second gear plates of first and second flavouring receptacle assemblies provided on the right and left sides of the flavouring apparatus 2.

Rotatably mounted on the gear plate 130 are six flavouring receptacles 110, which are evenly spaced around the gear plate at equal distances from the centre of the gear plate. Each flavouring receptacle is generally cylinder-shaped and is mounted such that the top and base are parallel with the support plate 120 and the gear plate 130. Each flavouring receptacle is defined by a generally cylindrical sidewall 111 and has a first end 112, facing away from the gear plate 130, that is open and a second end (or base) 113, facing towards the gear plate, that is closed. In use, the support plate 120 is mounted such that the axis of each flavouring receptacle (i.e. the axis of the cylinder defined by the sidewall) makes an angle of between 10° and 40° from the horizontal and such that the open end of the flavouring receptacle is higher than the closed end. Accordingly, when product and flavouring are received in the flavouring receptacle, they are supported primarily on the sidewall 111 of the flavouring receptacle; however, the incline of the sidewall ensures product and flavouring are retained in the flavouring receptacle during mixing.

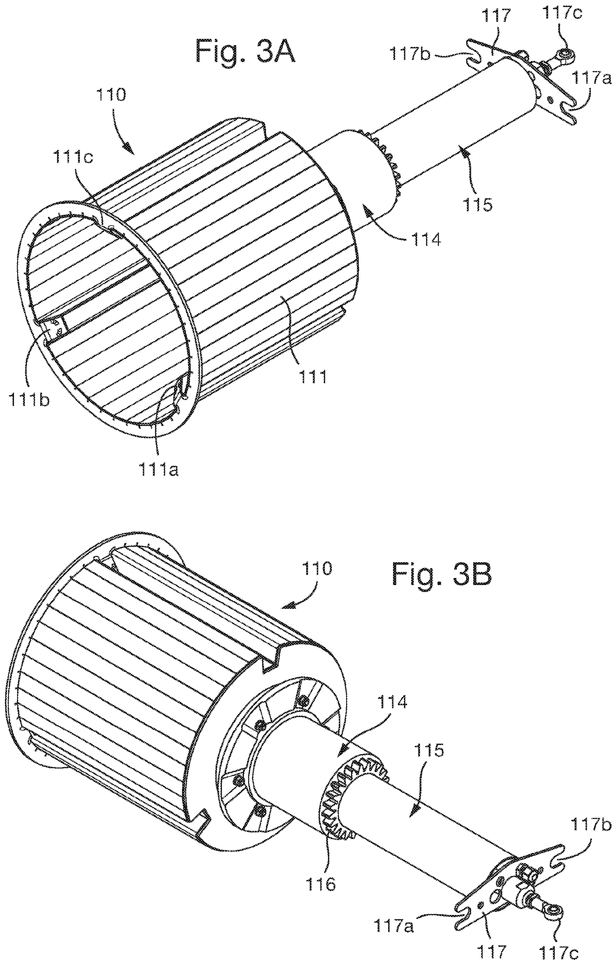

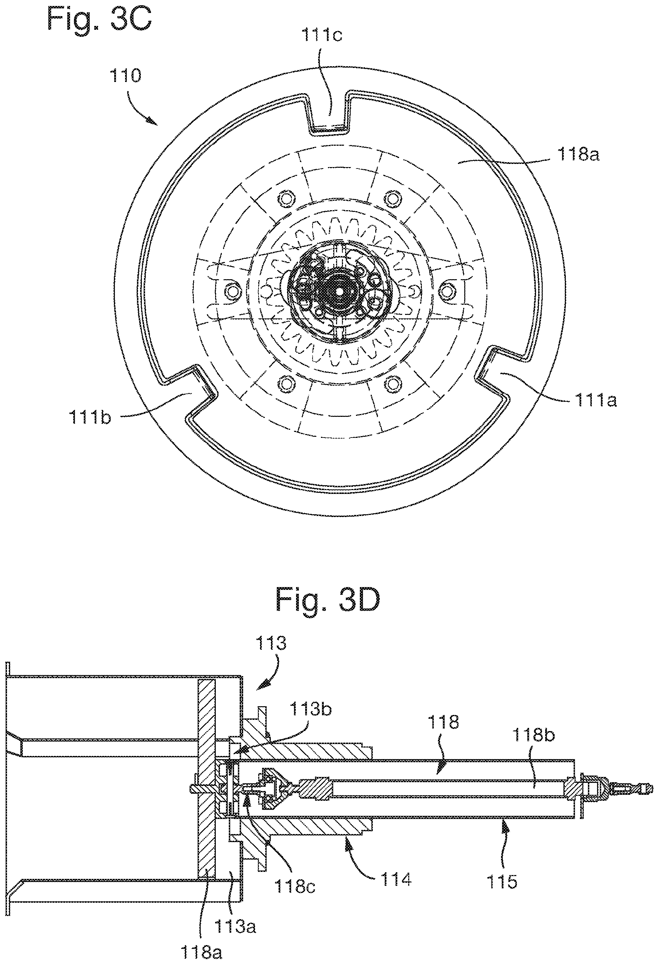

A flavouring receptacle will now be described in more detail with reference to Figures 3A to 3D as well as Figure 2B.

As has been described above, each flavouring receptacle is generally cylinder-shaped defined by a generally cylindrical sidewall 111. The sidewall has three projecting members 111a, 111b, 111c, that project towards the centre of the flavouring receptacle along the entire inside length of the sidewall 111. The projecting members have substantially uniform cross-section along the length of the flavouring receptacle such that the volume defined within the flavouring receptacle has a substantially constant cross-section between the first and second ends 112, 113. These projecting members 111a, 111b, 111c act to agitate a portion of product and a dose of flavouring in the flavouring receptacle as the flavouring receptacle is rotated, leading to improved coating of the product in flavouring.

The sidewall 111 defines an open first end 112, which allows the flavouring receptacle to receive product and flavouring during operation. A closed second end or base 113 is also provided opposite the first end 112. The closed second end comprises a rear wall portion 113a that defines an opening 113b at its centre. The rear wall 113a is fixedly coupled to a collar 114 such that the opening 113b communicates with the centre of the collar 114. The collar 114 extends through a corresponding opening in the gear plate and through the aperture 121 of the support plate 120 close to the periphery of the aperture. Each collar receives, through its centre, a shaft 115 that passes through the opening 113b at the closed end of the flavouring receptacle. Each collar 114 is rotatably supported in the corresponding opening of the gear plate by a bearing (not shown). Each collar 114 has an array of teeth 116 that project radially from the centre axis of the collar at a rear surface of the collar forming a gear that is arranged to cooperate with the teeth 122 along the periphery of the aperture 121 in the support plate 120. Accordingly, as the gear plate 130 is driven to rotate, the flavouring receptacles are moved along the periphery of the aperture 121 of the support plate. The teeth 116 of each collar 114 engage the teeth 122 along the periphery of the aperture and generate rotational movement of the flavouring receptacles 110 as the collars 114 move relative to the aperture of the support plate 120.

The flavouring receptacle also comprises an actuator 118. The actuator 118 comprises an ejecting plate 118a whose shape substantially matches the cross-section of the volume defined within the flavouring receptacle. The shaft 115 that passes through the collar 114 and to the opening 113b at the closed end of the flavouring receptacle is fixedly coupled to the rear of the ejecting plate 118a. The shaft 115 is slideably moveable through the collar 114 in use to allow the ejecting plate to be moved towards the open first end of the flavouring receptacle.

Within the shaft 115 is a pneumatic actuator 118b which extends along the centre of the hollow interior of the shaft 115 and protrudes out of the rear of the shaft 115, where it couples to a support member 117, as will be described below. At the front end, the pneumatic actuator is coupled via a bearing 118c to the inside surface of the shaft 115 and is thereby coupled to the ejector plate 118a. The bearing 118c ensures that the pneumatic actuator 118b does not rotate, even as the ejector plate 118a and the shaft 115 rotate through rotation of the flavouring receptacle sidewall 111.

At the rear end of each pneumatic actuator 118b is provided a support member 117, which supports the pneumatic actuator 118b. Each support member 117 comprises an elongate plate member that extends radially from the pneumatic actuator 118b. This plate has first and second notches 117a, 117b that receive first and second support bars 132a, 132b that extend from the rear of the gear plate 130 and that are fixed relative to the gear plate. The support member 117 also has a coupling 117c at its rear end that couples to a bridging member 132c that extends between the rear ends of the support bars 132a, 132b. The coupling 117c comprises a self-aligning bearing 117c to isolate the pneumatic actuator from any bending forces.

In use, the ejecting plate is initially arranged at the second end 113 of the flavouring receptacle. When it is required that the portion of product and flavouring be ejected out of the flavouring receptacle 110, the ejecting plate 118a is moved from the second end 113 towards the first end 112 by the action of the pneumatic actuator 118b. Specifically, the pneumatic actuator 118b is driven by pneumatic connections (not shown) that enter the rear of the shaft and connect to the pneumatic actuator 118b. When the actuator 118b is activated, it pushes the shaft 115 through the opening 113b in the rear of the flavouring receptacle and thereby pushes the ejecting plate 118a towards the open end of the flavouring receptacle. The actuator 118b is braced at its rear end during this action by the support member 117. As a result, the ejecting plate 118a moves to the open end of the flavouring receptacle, ejecting any product and flavouring.

Since the shape of the ejecting plate 118a matches the cross-section of the flavouring receptacle, movement of the ejecting plate 118a from the second end to the first end sweeps through substantially the entire flavouring volume and ensures that product and flavouring are reliably ejected from the flavouring receptacle. Especially where the product is sticky product, such as meat, this ejecting movement can be performed at high speed so that product and flavouring is less likely to stick to the ejecting plate 118a. Other means of preventing sticking of product include providing the ejecting plate 118a with a textured surface, or treating the ejecting plate with a non-stick coating.

The pneumatics associated with the pneumatic actuator 118b will now be described. As shown in Figure 2B, the rear of the gear plate 130 has at its centre a pneumatic supply 30 that comprises a rotary air coupling system, as is known in the art. The pneumatic supply 30 provides the gas needed to drive the pneumatic actuators 118b. Each pneumatic actuator 118b has associated with it a mechanical valve 31 that is located on the rear of the gear plate such that when the corresponding flavouring receptacle 110 is located at the ejection position, the mechanical valve 31 is substantially at the top of the gear plate, near an upper edge of the aperture 121 through the support plate 120. When the mechanical valve 31 is activated by means described below, the pneumatic system provides compressed gas to the corresponding pneumatic actuator 118b in order to cause ejection of the portion of product and flavouring and then to return the ejection plate 118a to its original position.

Located above the aperture 121 of the support plate 120 is a cam plate 32 moveable via an actuator 33 between a first position and a second position. In the first position, the cam plate 32 engages a mechanical valve 31 as it passes the upper edge of the aperture, thereby activating the pneumatic actuator 118b of the flavouring receptacle 110 located in the ejection position. In its second position, i.e. with the actuator 33 extended, the cam plate 32 is moved away from the aperture such that it does not engage a mechanical valve 31 as it passes. Hence, the product and flavouring of the receptacle 110 located at the ejection position are retained in the flavouring receptacle 110. This is useful if there is no tray (or other package) available to receive a portion of flavoured product at the conveyor 3. A control system, not shown, will log that the flavouring receptacle remains full and will not add another portion when the receptacle reaches the product delivery position.

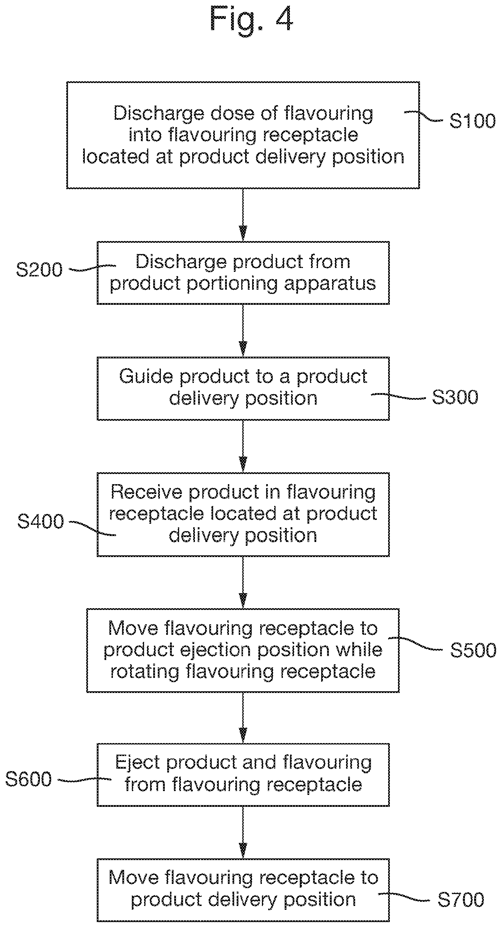

The operation of the flavouring apparatus of Figures 1A to 3D will now be described in more detail with further reference to Figure 4.

Firstly, in step S100, dose of flavouring is discharged into the flavouring receptacle located at product delivery position by a flavouring dispenser via a nozzle of the flavouring dispenser 25a, 25b located at the product delivery position.

Secondly, in step S200 a portion of product is discharged from the product portioning apparatus 1 via the feed chute 11. The portion of product may, for example, be determined by its weight or volume. The portion of product is then guided to a product delivery position in step S300 by the product distribution system, as described above. In alternative embodiments, step S300 may be achieved by the product portioning apparatus, for example, the feed chute may guide the product to the product delivery position where only one product delivery position is required.

The portion of product is received in a flavouring receptacle located at the product delivery position in step S400.

While step S100 is described as occurring before steps S200 to S400, it will be appreciated that this step could occur before any of those other steps and could take place simultaneously with one or more of those steps. However, it is preferable that flavouring is received in the flavouring receptacle before the product as this allows the flavouring to access the rear of the product portion.

The flavouring receptacle is moved from the product delivery position to the product ejection position in step S500. As has been described above, the geared connection between the shafts 115 and the periphery of the aperture 121 means that movement of the flavouring receptacles by rotation of the gear plate 130 causes the flavouring receptacles to rotate. As the flavouring receptacle moves and rotates, the moving sidewall 111 on which the portion of product and dose of flavouring are supported causes tumbling of the product in the flavouring. The projecting members 111a, 111b, 111c also rotate as the sidewall 111 of the flavouring receptacle rotates, further agitating the product and flavouring during rotation.

It should be noted here that, while movement of the flavouring receptacles is described as a step separate from steps S100 to S400, in practice the flavouring receptacles may be continuously moving and rotating during operation. Accordingly, steps S100 to S400 will typically take place relatively quickly, so that product and flavouring are discharged and received without significant movement of the flavouring receptacle taking place.

In the present embodiment, the product delivery position is located approximately at a 3 or 9 o'clock position, depending on whether the flavouring receptacle is part of the left or right side of the flavouring apparatus. The product ejection position is located approximately at a 6 o'clock position for both sides of the apparatus 2 such that the product and flavouring are retained in the flavouring receptacle for approximately 270° of a full rotation of the gear plate 130, providing ample time for mixing of product and flavouring.

In step S600 the product and flavouring are ejected from the flavouring receptacle by the actuator 118. Specifically, the pneumatic actuator 118b is activated by the mechanical valve 31, pushing the ejector plate 118a from the second end of the flavouring receptacle 113 towards the first end 112. The product and flavouring are ejected out of the flavouring receptacle 110 and received in downstream guide 23a, 23b for guiding product downstream. The ejector plate 118a is then returned to its initial position by the pneumatic actuator 118b, returning the ejector plate 118a to the second end 113 of the flavouring receptacle 110.

Finally, in step S700, the flavouring receptacle is moved again to the product delivery position ready to receive a subsequent portion of product and dose of flavouring and the above process repeats.

The above description focuses on the cycle of a single flavouring receptacle on one half of the flavouring apparatus, but it will be appreciated that this process will be taking place simultaneously, with a phase offset, for each flavouring receptacle 110 and for each side of the flavouring apparatus 2.

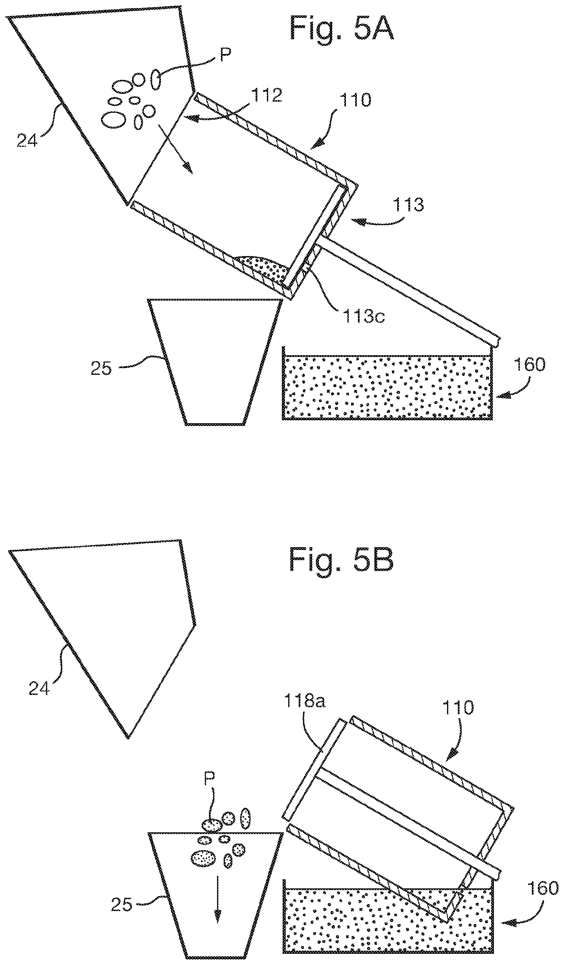

An alternative embodiment will now be described with reference to Figures 5A to 5C. Figures 5A and 5B show a single flavouring receptacle 110 in cross-section. In this embodiment, the flavouring receptacles are structured similarly to those described above with reference to Figures 1A to 3D. The flavouring receptacles differ in that there is a flavouring aperture 113c located in the rear wall 113a of the flavouring receptacle, part way between the periphery of the flavouring receptacle and the opening 113b at the centre of the second end 113, whose purpose will be described further below. Further, the flavouring receptacle is mounted such that movement of the sidewall 111 relative to the ejecting plate 118a is provided by moving the flavouring receptacle sidewall 111 while keeping the ejecting plate 118a stationary.

In this embodiment, the flavouring receptacles 110 are again rotatable, but do not move about a closed loop path between a product delivery position and a product ejection position. Rather, the only translational movement performed by the flavouring receptacle is provided by moving the flavouring receptacle sidewall 111 between a forward position, shown in Figure 5A, in which the ejecting plate 118a is at the second end 113, and a rearward position, shown in Figure 5B, in which the ejecting plate 118a is at the first end 112 of the flavouring receptacle 110.

Initially, the sidewall 111 of the flavouring receptacle 110 is located such that the ejecting plate 118a is at the second end, i.e. the sidewall is in the forward position. In this forward position, the first end 112 of the flavouring receptacle cooperates with a product delivery chute 24 for receiving a portion of product P from an upstream product portioning apparatus (not shown). Upon receipt of the portion of product P, the flavouring receptacle sidewall 111 is driven to rotate by a drive system (not shown) while in this forward position, thereby coating product in flavouring already contained in the flavouring receptacle, which has been introduced by a mechanism described below.

When the product is sufficiently coated in flavouring, the flavouring receptacle sidewall 111 is moved into the rearward position, thereby moving the ejecting plate 118a relative to the flavouring receptacle sidewall 111 and causing ejection of the flavoured product P. In the rearward position, the first end 112 of the flavouring receptacle cooperates with a downstream guide 25 for guiding the flavoured product to downstream packaging apparatuses.

Movement of the flavouring receptacle sidewall 111 into the rearward position causes the second end 113 of the flavouring receptacle to be partly submerged in a flavouring reservoir 160 containing flavouring. In this rearward position, the flavouring aperture 113c communicates with the flavouring reservoir such that flavouring enters into the flavouring receptacle 110. The flavouring receptacle may be rotated to first provide the flavouring aperture 113c submerged in the flavouring reservoir, before further rotating the flavouring receptacle once a dose of flavouring is received to move the flavouring aperture 113c out of the reservoir and retain the flavouring in the flavouring receptacle. In this embodiment, it may be necessary to keep the flavouring reservoir filled with a constant volume of flavouring to ensure that the dose of flavouring received is consistent.

Once the product is ejected and a new dose of flavouring is received in the flavouring receptacle 110, the sidewall 111 may be returned to the forward position for receiving a new portion of product P. In this embodiment, the ejecting plate 118a does not form a tight seal with the inner surface of the sidewall 111 of the flavouring receptacle such that the flavouring can pass in front of the ejecting plate 118a as the ejecting plate returns to the second end 113 of the flavouring receptacle.

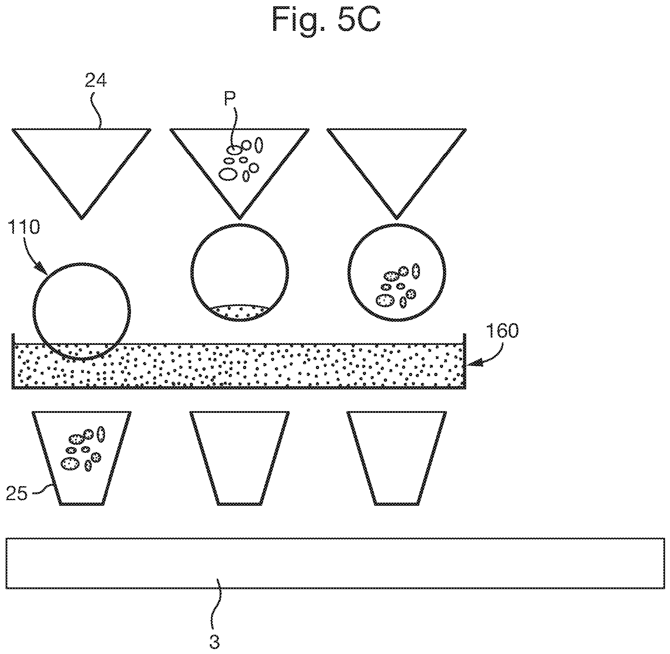

Figure 5C shows the arrangement of a plurality of flavouring receptacles 110 making up a flavouring apparatus. Here, the flavouring receptacles 110 are arranged alongside one another, laterally spaced in a direction perpendicular to the axis of the flavouring receptacles. Each flavouring receptacle has a corresponding product delivery chute 24 and a corresponding downstream guide 25 for guiding ejected product to a conveyor 3. The plurality of flavouring receptacles in this embodiment share a common flavouring reservoir 160, which extends parallel to the direction of spacing of the flavouring receptacles. The flavouring receptacles can be delivered product by an upstream product portioning apparatus, which distributes product to the corresponding product delivery chutes 24.

This embodiment may be adapted to, instead of using a flavouring reservoir, have a flavouring dispenser located above the first end of each flavouring receptacle when in the forward position to receive both the product and flavouring via the first end of the flavouring receptacle. Alternatively, one flavouring dispenser may be provided that moves between the various flavouring receptacles to provide flavouring.

## Claims

1. A flavouring apparatus (2) for coating product in flavouring comprising:
a flavouring receptacle (110) configured for receiving a portion of product and a dose of flavouring, the flavouring receptacle comprising:
an open first end (112) arranged to receive the portion of product in use,
a peripheral sidewall (111) at least partly defining a flavouring volume extending from the first end (112) of the flavouring receptacle (110), the flavouring volume for receiving the portion of product and dose of flavouring, and
an ejecting member (118a) movable relative to the peripheral sidewall through the flavouring volume towards the first end (112) for ejecting a flavoured portion of product out of the flavouring volume through the first end of the flavouring receptacle; and
a drive system configured to rotate at least the peripheral sidewall (111) of the flavouring receptacle (110) so as to cause mixing of the portion of product and the dose of flavouring in the flavouring volume;
wherein, in use, the flavouring receptacle (110) is arranged such that the portion of product and the dose of flavouring are retained in the flavouring volume during rotation of the peripheral sidewall;
**characterized in that** the ejecting member (118a) is configured to move in a reciprocating fashion from a first position, adopted during mixing of the product and flavouring, to a second position proximate the first end (112) of the flavouring receptacle for ejecting flavoured product.

2. A flavouring apparatus according to claim 1, comprising a plurality of flavouring receptacles (110) configured for receiving respective portions of product and respective doses of flavouring, wherein the drive system is configured to rotate at least the peripheral sidewalls (111) of each of the flavouring receptacles so as to cause mixing of the respective portions of product and the respective doses of flavouring and wherein, in use, the portion of product and the dose of flavouring are retained in the flavouring volume during rotation of the peripheral sidewall, wherein the ejecting member (118a) of each flavouring receptacle is configured to move in a reciprocating fashion from a first position, adopted during mixing of the product and flavouring, to a second position proximate the first end (112) of the flavouring receptacle for ejecting flavoured product, preferably further comprising a transport system configured to move each of the plurality of flavouring receptacles (110) sequentially to a product delivery position for receiving a portion of product and/or to a product ejection position at which the flavoured portion of product is ejected, wherein further preferably the transport system is configured to move each of the plurality of flavouring receptacles (110) along a path defining a closed loop.

3. A flavouring apparatus according to at least claim 2, wherein the plurality of flavouring receptacles (110) form a first set of flavouring receptacles and further comprising a second set of flavouring receptacles, wherein the transport system is configured to move each of the second set of flavouring receptacles sequentially to a second product delivery position for receiving a portion of product.

4. A flavouring apparatus according to any of the preceding claims, wherein the or each flavouring receptacle further comprises a base (113), the ejecting member (118a) of the or each flavouring receptacle preferably forming at least part of the base, wherein the peripheral sidewall (111) extends between the first end (112) and the base (113), thereby defining the flavouring volume, wherein preferably the or each flavouring receptacle (110) is mounted such that, in use, the first end of the flavouring receptacle is arranged above and laterally offset from the base (113), wherein further preferably the or each flavouring receptacle is mounted such that, in use, an axis passing through a centre of the first end (112) and a centre of the base (113) makes an angle of no more than 45° to the horizontal, preferably no more than 30° to the horizontal, such that product and flavouring in the flavouring volume are supported by the peripheral sidewall (111) during mixing.

5. A flavouring apparatus according to any of the preceding claims, wherein the peripheral sidewall (111) of the or each flavouring receptacle defines a flavouring volume having a substantially constant cross-section, wherein preferably the ejecting member (118a) of the or each flavouring receptacle has a shape that substantially matches the cross-section of the flavouring volume.

6. A flavouring apparatus according to any of the preceding claims, wherein the peripheral sidewall (111) of the or each flavouring receptacle is substantially cylindrical so as to define a substantially cylindrical flavouring volume.

7. A flavouring apparatus according to any of claims 1 to 6, further comprising a flavouring reservoir (160) for holding flavouring in use, and wherein the or each flavouring receptacle comprises a flavouring aperture (113c) disposed in one of the peripheral sidewall (111) and the base (113), wherein movement of the ejecting member (118a) relative to the peripheral sidewall (111) is performed by moving the peripheral sidewall and, if provided, the base (113) between a first position, adopted during mixing of the product and flavouring, and a second position, in which the ejecting member (118a) is proximate the first end of the flavouring receptacle, and wherein in the second position, the peripheral sidewall (111) or the base (113) is at least partly received in the flavouring reservoir (160) such that flavouring passes through the flavouring aperture (113c) and into the flavouring volume.

8. A flavouring apparatus according to any of the preceding claims, wherein the peripheral sidewall (111) of the or each flavouring receptacle (110) comprises at least one projecting member (111a, 111b 111c) that projects into the flavouring volume for agitating the portion of product and the dose of flavouring during mixing by rotation of the peripheral sidewall (111) of the flavouring receptacle (110).

9. A flavouring apparatus according to any of the preceding claims, wherein the peripheral sidewall (111) of the or each flavouring receptacle (110) is shaped such that, in use, the peripheral sidewall (111) is generally inclined at an angle of no more than 45° to the horizontal, preferably no more than 30° to the horizontal, such that product and flavouring in the flavouring volume are supported by the peripheral sidewall (111) during mixing.

10. A flavouring apparatus according to at least claim 4, wherein the drive system is configured to rotate at least the peripheral sidewall (111) of the or each flavouring receptacle (110) about an axis that passes through the first end (112) and the base (113) of the flavouring receptacle (110), preferably about an axis that passes substantially through a centre of the first end (112) and a centre of the base (113) of the flavouring receptacle (110).

11. A flavouring apparatus according to any of the preceding claims, further comprising an actuating system (118b) arranged to actuate the ejecting member (118a) of the or each flavouring receptacle.

12. A flavouring apparatus according to any of the preceding claims comprising a control system configured to control one or more of the drive system, the transport system and the actuating system (118b).

13. A flavouring apparatus according to any of the preceding claims, further comprising a flavouring dispenser (25a, 25b) arranged to dispense a measured dose of flavouring at least at one flavouring delivery position for receipt in the or each flavouring receptacle (110) via the first end (112) of the flavouring receptacle (110).

14. A system for preparing flavoured portions of product comprising the flavouring apparatus according to any of claims 1 to 13, and further comprising:
a product portioning apparatus (1) arranged to receive product in bulk and discharge a measured portion of product at least at one product delivery position for receipt in the or each flavouring receptacle (110), and preferably further comprising a packaging apparatus arranged to receive and individually package each flavoured portion of product ejected at the product ejection position.

15. A method of coating product in flavouring comprising:
providing a portion of product to a flavouring receptacle (110), the flavouring receptacle comprising an open first end (112) arranged to receive the portion of product in use and a peripheral sidewall (111) at least partly defining a flavouring volume extending from the first end of the flavouring receptacle (110), the flavouring volume for receiving the portion of product and dose of flavouring;
providing a dose of flavouring into the flavouring receptacle (110);
rotating at least the peripheral sidewall (111) of the flavouring receptacle so as to cause mixing of the portion of product and the dose of flavouring in the flavouring receptacle (110); and
ejecting the flavoured product through the first end (112) of the flavouring receptacle by moving an ejecting member (118a) through the flavouring volume towards the first end (112);
wherein the flavouring receptacle (110) is arranged such that the portion of product and the dose of flavouring are retained in the flavouring volume during rotation of the peripheral sidewall (111);
**characterized in that** the ejecting member (118a) is configured to move in a reciprocating fashion from a first position, adopted during mixing of the product and flavouring, to a second position proximate the first end (112) of the flavouring receptacle (110) for ejecting flavoured product.

## Patentansprüche

1. Vorrichtung (2) zur Beschichtung eines Produkts in Geschmacksstoff, umfassend:
Einen Behälter (110) für Geschmacksstoff, der zum Empfangen eines Produktanteils und einer Dosis von Geschmacksstoff ausgelegt ist, wobei der Behälter für Geschmacksstoff umfasst:
Ein offenes erstes Ende (112), das eingerichtet ist, im Gebrauch den Produktanteil zu empfangen,
eine periphere Seitenwand (111), die wenigstens teilweise ein Geschmacksstoffvolumen, das sich vom ersten Ende (112) des Behälters (110) für Geschmacksstoff erstreckt, das Geschmacksstoffvolumen zum Empfang des Produktanteils und der Dosis von Geschmacksstoff, und
ein Ausstoßelement (118a) definiert, das relativ zur peripheren Seitenwand durch das Geschmacksstoffvolumen in Richtung des ersten Endes (112) beweglich ist, um ein aromatisiertes Produkt aus dem Geschmacksstoffvolumen durch das erste Ende des Behälters für Geschmacksstoff auszustoßen; und
ein Antriebssystem, das ausgelegt ist, wenigstens die periphere Seitenwand (111) des Behälters (110) für Geschmacksstoff zu rotieren, um die Vermischung des Produktanteils und der Dosis des Geschmacksstoffs im Geschmacksstoffvolumen zu bewirken;
wobei, im Gebrauch, der Behälter (110) für Geschmacksstoff derart eingerichtet ist, dass der Produktanteil und die Dosis von Geschmacksstoff, während der Drehung der peripheren Seitenwand, im Geschmacksstoffvolumen behalten werden;
**dadurch gekennzeichnet, dass** das Ausstoßelement (118a) ausgelegt ist, sich auf hinund hergehende Weise aus einer ersten Position, die während der Vermischung des Produkts und des Geschmacksstoffs eingenommen wurde, in eine zweite Position nahe dem ersten Ende (112) des Behälters für Geschmacksstoff zum Ausstoßen des aromatisierten Produkts zu bewegen.

2. Vorrichtung für Geschmacksstoff nach Anspruch 1, die eine Vielzahl von Behältern (110) für Geschmacksstoff umfasst, die zum Empfangen jeweiliger Produktanteile und jeweiliger Dosen von Geschmacksstoff ausgelegt sind, wobei das Antriebssystem ausgelegt ist, wenigstens die peripheren Seitenwände (111) jedes der Behälter für Geschmacksstoff zu rotieren, um die Vermischung der jeweiligen Produktanteile und der Dosen von Geschmacksstoff zu bewirken, und wobei, im Gebrauch, der Produktanteil und die Dosis von Geschmacksstoff, während der Drehung der peripheren Seitenwand, um Geschmacksstoffvolumen behalten werden, wobei das Ausstoßelement (118a) jedes Behälters für Geschmacksstoff ausgelegt ist, sich auf eine hin- und hergehende Weise aus einer ersten Position, die während der Vermischung des Produkts und des Geschmacksstoffs eingenommen wurde, in eine zweite Position nahe dem ersten Ende (112) des Behälters für Geschmacksstoff zum Ausstoßen des aromatisierten Produkts zu bewegen, vorzugsweise ferner ein Transportsystem umfassend, das ausgelegt ist, jeden der Vielzahl von Behältern (110) für Geschmacksstoff sequenziell zu einer Position für Produktzuleitung zum Empfangen eines Produktanteils und/oder zu einer Position für Produktausstoß zu bewegen, in welcher der aromatisierte Teil des Produkts ausgestoßen wird, wobei ferner bevorzugt das Transportsystem ausgelegt ist, jeden der Behälter (110) für Geschmacksstoff entlang eines Weges zu bewegen, der eine geschlossene Schleife definiert.

3. Vorrichtung für Geschmacksstoff nach Anspruch 2, wobei die Vielzahl von Behältern (110) für Geschmacksstoff einen ersten Satz von Behältern für Geschmacksstoff bildet und ferner einen zweiten Satz von Behältern für Geschmacksstoff umfassend, wobei das Transportsystem ausgelegt ist, jeden des zweiten Satzes von Behältern für Geschmacksstoff sequenziell zu einer zweiten Position für Produktzuleitung zum Empfangen eines Produktanteils zu bewegen.

4. Vorrichtung für Geschmacksstoff nach irgendeinem der vorhergehenden Ansprüche, wobei jeder Behälter für Geschmacksstoff ferner eine Basis (113) umfasst, wobei das Ausstoßelement (118a) des oder jedes Behälters für Geschmacksstoff wenigstens einen Teil der Basis bildet, wobei sich die periphere Seitenwand (111) zwischen dem ersten Ende (112) und der Basis (113) erstreckt, wodurch das Geschmacksvolumen definiert wird, wobei vorzugsweise der oder jeder Behälter (110) für Geschmacksstoff derart montiert ist, dass, im Gebrauch, das erste Ende des Behälters für Geschmacksstoff über der Basis (113) und lateral davon versetzt angeordnet ist, wobei ferner bevorzugt der oder jeder Behälter für Geschmacksstoff derart montiert ist, dass, im Gebrauch, eine Achse durch ein Zentrum des ersten Endes (112) verläuft und ein Zentrum (113) einen Winkel von nicht mehr als 45° zur Horizontalen, vorzugsweise nicht mehr als 30° zur Horizontalen derart bildet, dass Produkt und Geschmacksstoff im Geschmacksstoffvolumen, während Vermischung von der peripheren Seitenwand (111) gestützt werden.

5. Vorrichtung für Geschmacksstoff nach irgendeinem der vorhergehenden Ansprüche, wobei die periphere Seitenwand (111) des oder jedes Behälters für Geschmacksstoff ein Geschmacksstoffvolumen definiert, das einen wesentlich konstanten Querschnitt aufweist, wobei vorzugsweise das Ausstoßelement (118a) des oder jedes Behälters für Geschmacksstoff eine Form aufweist, die wesentlich dem Querschnitt des Geschmacksstoffvolumens entspricht.

6. Vorrichtung für Geschmacksstoff nach irgendeinem der vorhergehenden Ansprüche, wobei die periphere Seitenwand (111) des oder jedes Behälters für Geschmacksstoff wesentlich zylindrisch ist, um ein wesentlich zylindrisches Geschmacksstoffvolumen zu definieren.

7. Vorrichtung für Geschmacksstoff nach irgendeinem der Ansprüche 1 bis 6, die ferner einen Vorratsbehälter (160) für Geschmacksstoff zum Fassen von Geschmacksstoff im Gebrauch umfasst, und wobei der oder jeder Behälter für Geschmacksstoff eine Öffnung (113c) für Geschmacksstoff umfasst, die in der peripheren Seitenwand (111) und/oder der Basis (113) angeordnet ist, wobei die Bewegung des Ausstoßelements (118a) relativ zur peripheren Seitenwand (111) durch Bewegung der peripheren Seitenwand und, falls bereitgestellt, der Basis (113) zwischen einer ersten Position, die während der Vermischung des Produkts und des Geschmacksstoffs eingenommen wird, und einer zweiten Position ausgeführt wird, in welcher das Ausstoßelement (118a) nahe dem ersten Ende des Behälters für Geschmacksstoff ist, und wobei in der zweiten Position die periphere Seitenwand (111) oder die Basis (113) wenigstens teilweise im Vorratsbehälter (160) derart aufgenommen wird, dass Geschmacksstoff durch die Öffnung (113c) für Geschmacksstoff und in das Geschmacksstoffvolumen passiert.

8. Vorrichtung für Geschmacksstoff nach irgendeinem der vorhergehenden Ansprüche, wobei die periphere Seitenwand (111) des oder jedes Behälters (110) für Geschmacksstoff wenigstens ein vorspringendes Element (111a, 111b 111c) umfasst, dass in das Geschmacksstoffvolumen zum Rühren des Produktanteils und der Dosis von Geschmacksstoff hervorsteht, während die Vermischung durch Drehung der peripheren Seitenwand (111) des Behälters (110) für Geschmacksstoff stattfindet.

9. Vorrichtung für Geschmacksstoff nach irgendeinem der vorhergehenden Ansprüche, wobei die periphere Seitenwand (111) des oder jedes Behälters (110) für Geschmacksstoff derart geformt ist, dass, im Gebrauch, die periphere Seitenwand (111) generell in einem Winkel von nicht mehr als 45° zur Horizontalen, vorzugsweise nicht mehr als 30° zur Horizontal derart geneigt ist, dass Produkt und Geschmacksstoff im Geschmacksstoffvolumen, während der Vermischung, von der peripheren Seitenwand (111) gestützt werden.

10. Vorrichtung für Geschmacksstoff nach wenigstens Anspruch 4, wobei das Antriebssystem ausgelegt ist, wenigstens die periphere Seitenwand (111) des oder jedes Behälters (110) für Geschmacksstoff um eine Achse, die durch das erste Ende (112) und die Basis (113) des Behälters (110) für Geschmacksstoff verläuft, vorzugsweise um eine Achse zu rotieren, die wesentlich durch ein Zentrum des ersten Endes (112) und ein Zentrum der Basis (113) des Behälters (110) für Geschmacksstoff verläuft.

11. Vorrichtung für Geschmacksstoff nach irgendeinem der vorhergehenden Ansprüche, die ferner ein Betätigungssystem (118b) umfasst, das eingerichtet ist, das Ausstoßelement (118a) des oder jedes Behälters für Geschmacksstoff zu betätigen.

12. Vorrichtung für Geschmacksstoff nach irgendeinem der vorhergehenden Ansprüche, die ein Steuersystem umfasst, das ausgelegt ist, ein oder mehrere des Steuersystems, des Transportsystems und/oder des Betätigungssystems (118b) zu steuern.

13. Vorrichtung für Geschmacksstoff nach irgendeinem der vorhergehenden Ansprüche, die ferner einen Spender (25a, 25b) für Geschmacksstoff umfasst, der eingerichtet ist, eine gemessene Dosis von Geschmacksstoff in wenigstens einer Position zur Zuleitung von Geschmacksstoff zum Empfangen im oder in jedem Behälter (110) für Geschmacksstoff über das erste Ende (112) des Behälters (110) für Geschmacksstoff abzugeben.

14. System zur Herstellung aromatisierter Produktanteile, das die Vorrichtung nach irgendeinem der Ansprüche 1 bis 13 umfasst, und ferner umfassend:
Eine Vorrichtung (1) zur Produktportionierung, die eingerichtet ist, Produkt in großen Mengen zu erhalten und ein gemessenes Produktanteil in wenigstens einer Position für Produktzuleitung zum Empfangen im oder in jedem Behälter (110) für Geschmacksstoff auszuspeisen, und vorzugsweise ferner eine Verpackungsvorrichtung umfassend, die eingerichtet ist, jedes aromatisierte, in der Position für Produktausstoß, ausgestoßene Produktanteil, zu empfangen und individuell zu verpacken.

15. Verfahren zur Beschichtung eines Produkts in Geschmacksstoff, umfassend:
Bereitstellen eines Produktanteils an einen Behälter (110) für Geschmacksstoff, wobei der Behälter für Geschmacksstoff ein offenes Ende (112), das eingerichtet ist, im Gebrauch, den Produktanteil zu empfangen und eine periphere Seitenwand (111), die wenigstens teilweise ein Geschmacksstoffvolumen, das sich vom ersten Ende des Behälters (110) für Geschmacksstoff erstreckt, das Geschmacksstoffvolumen zum Empfangen des Produktanteils und der Dosis von Geschmacksstoff umfasst;
Bereitstellen einer Dosis von Geschmacksstoff in den Behälter (110) für Geschmacksstoff;
Rotieren wenigstens der peripheren Seitenwand (111) des Behälters für Geschmacksstoff, um die Vermischung des Produktanteils und der Dosis von Geschmacksstoff im Behälter (110) für Geschmacksstoff zu bewirken; und
Ausstoßen des aromatisierten Produkts durch das erste Ende (112) des Behälters für Geschmacksstoff durch Bewegen eines Ausstoßelements (118a) durch das Geschmacksstoffvolumen in Richtung des ersten Endes (112);
wobei der Behälter (110) für Geschmacksstoff derart eingerichtet ist, dass der Produktanteil und die Dosis von Geschmacksstoff, während der Drehung der peripheren Seitenwand (111), im Geschmacksstoffvolumen behalten werden;
**dadurch gekennzeichnet, dass** das Ausstoßelement (118a) ausgelegt ist, sich auf hinund hergehende Weise aus einer ersten Position, die während der Vermischung des Produkts und des Geschmacksstoffs eingenommen wurde, in eine zweite Position nahe dem ersten Ende (112) des Behälters (110) für Geschmacksstoff zum Ausstoßen des aromatisierten Produkts zu bewegen.

## Revendications

1. Appareil d'aromatisation (2) pour enrober d'aromatisant un produit, comprenant :
un réceptacle d'aromatisant (110) configuré pour recevoir une portion de produit et une dose d'aromatisant, le réceptacle d'aromatisant comprenant :
un premier bout ouvert (112) agencé pour recevoir la portion de produit en cours d'usage,
une paroi latérale périphérique (111) définissant au moins partiellement un volume d'aromatisant s'étendant depuis le premier bout (112) du réceptacle d'aromatisant (110), le volume d'aromatisant pour recevoir la portion de produit et la dose d'aromatisant, et
un élément éjecteur (118a) pouvant être déplacé relativement à la paroi latérale périphérique à travers le volume d'aromatisant en direction du premier bout (112) pour éjecter une portion aromatisée de produit hors du volume d'aromatisant par le premier bout du réceptacle d'aromatisant ; et
un système d'entraînement configuré pour faire tourner au moins la paroi latérale périphérique (111) du réceptacle d'aromatisant (110), de façon à donner lieu au mélange de la portion de produit et de la dose d'aromatisant dans le volume d'aromatisant ;
de sorte qu'en cours d'usage le réceptacle d'aromatisant (110) soit agencé de façon à ce que la portion de produit et la dose d'aromatisant soient maintenues dans le volume d'aromatisant au cours de la rotation de la paroi latérale périphérique ;
**caractérisé en ce que** l'élément éjecteur (118a) est configuré pour se déplacer en va-et-vient d'une première position, adoptée au cours du mélange du produit et de l'aromatisant, à une deuxième position proche du premier bout (112) du réceptacle d'aromatisant pour éjecter le produit aromatisé.

2. Appareil d'aromatisation selon la revendication 1, comprenant une pluralité de réceptacles d'aromatisant (110) configurés pour recevoir des portions respectives de produit et des doses respectives d'aromatisant, le système d'entraînement étant configuré pour faire tourner au moins les parois latérales périphériques (111) de chacun des réceptacles d'aromatisant, de façon à entraîner le mélange des portions respectives de produit et des doses respectives d'aromatisant, la portion de produit et la dose d'aromatisant étant maintenues, en cours d'usage, dans le volume d'aromatisant au cours de la rotation de la paroi latérale périphérique, l'élément éjecteur (118a) de chaque réceptacle d'aromatisant étant configuré pour se déplacer en va-et-vient d'une première position, adoptée au cours du mélange du produit et de l'aromatisant, à une deuxième position proche du premier bout (112) du réceptacle d'aromatisant pour éjecter le produit aromatisé, comprenant, en outre, de préférence, un système de transport configuré pour déplacer chacun de la pluralité des réceptacles d'aromatisant (110) en séquence dans une position de distribution du produit pour recevoir une portion du produit et/ou dans une position d'éjection du produit dans laquelle la portion aromatisée du produit est éjectée, le système de transport étant configuré en outre de préférence pour déplacer chacun de la pluralité des réceptacles d'aromatisant (110) sur un chemin définissant un circuit fermé.

3. Appareil d'aromatisation selon au moins la revendication 2, la pluralité des réceptacles d'aromatisant (110) constituant un premier jeu de réceptacles d'aromatisant, et comprenant en outre un deuxième jeu de réceptacles d'aromatisant, le système de transport étant configuré pour déplacer chaque réceptacle du deuxième jeu de réceptacles d'aromatisant en séquence jusqu'à une deuxième position de distribution du produit pour recevoir une portion de produit.

4. Appareil d'aromatisation selon une quelconque des revendications précédentes, le ou chaque réceptacle d'aromatisant comprenant en outre une base (113), l'élément éjecteur (118a) du ou de chaque réceptacle d'aromatisant constituant de préférence au moins une portion de la base, la paroi latérale périphérique (111) s'étendant entre le premier bout (112) et la base (113), en définissant ainsi le volume d'aromatisant, de préférence le ou chaque réceptacle d'aromatisant (110) étant monté de sorte qu'en cours d'usage le premier bout du réceptacle d'aromatisant soit agencé au-dessus de la base (113), et décalé latéralement de celle-ci, en outre de préférence le ou chaque réceptacle d'aromatisant étant monté de sorte qu'en cours d'usage un axe passant à travers un centre du premier bout (112) et un centre de la base (113) forme un angle maximum de 45° par rapport à l'horizontale, de préférence un angle maximum de 30° par rapport à l'horizontale, afin que le produit et l'aromatisant dans le volume d'aromatisant soient supportés par la paroi latérale périphérique (111) au cours du mélange.

5. Appareil d'aromatisation selon une quelconque des revendications précédentes, la paroi latérale périphérique (111) du ou de chaque réceptacle d'aromatisant définissant un volume d'aromatisant présentant une section transversale substantiellement constante, de préférence la forme de l'élément éjecteur (118a) du ou de chaque réceptacle d'aromatisant étant substantiellement assortie à la section transversale du volume d'aromatisant.

6. Appareil d'aromatisation selon une quelconque des revendications précédentes, la paroi latérale périphérique (111) du ou de chaque réceptacle d'aromatisant étant substantiellement cylindrique de façon à définir un volume d'aromatisant substantiellement cylindrique.

7. Appareil d'aromatisation selon une quelconque des revendications 1 à 6, comprenant en outre un réservoir d'aromatisant (160) pour contenir de l'aromatisant en cours d'usage, et le ou chaque réceptacle d'aromatisant comprenant une ouverture d'aromatisant (113c) disposée dans une de la paroi latérale périphérique (111) et de la base (113), le déplacement de l'élément éjecteur (118a) relativement à la paroi latérale périphérique (111) s'effectuant en déplaçant la paroi latérale périphérique et, le cas échéant, la base (113) entre une première position, adoptée au cours du mélange du produit et de l'aromatisant, et une deuxième position, dans laquelle l'élément éjecteur (118a) est proche du premier bout du réceptacle d'aromatisant, et, dans la deuxième position, la paroi latérale périphérique (111) ou la base (113) est reçue au moins partiellement dans le réservoir d'aromatisant (160), de sorte que l'aromatisant passe à travers l'ouverture d'aromatisant (113c), et dans le volume d'aromatisant.

8. Appareil d'aromatisation selon une quelconque des revendications précédentes, la paroi latérale périphérique (111) du ou de chaque réceptacle d'aromatisant (110) comprenant au moins un élément saillant (111a, 111b, 111c) faisant saillie dans le volume d'aromatisant pour agiter la portion de produit et la dose d'aromatisant au cours du mélange par rotation de la paroi latérale périphérique (111) du réceptacle d'aromatisant (110).

9. Appareil d'aromatisation selon une quelconque des revendications précédentes, la forme de la paroi latérale périphérique (111) du ou de chaque réceptacle d'aromatisant (110) étant telle qu'en cours d'usage, la paroi latérale périphérique (111) est globalement inclinée à un angle maximum de 45° par rapport à l'horizontale, de préférence un angle maximum de 30° par rapport à l'horizontale, afin que le produit et l'aromatisant dans le volume d'aromatisant soient supportés par la paroi latérale périphérique (111) au cours du mélange.

10. Appareil d'aromatisation selon au moins la revendication 4, le système d'entraînement étant configuré pour faire tourner au moins la paroi latérale périphérique (111) du ou de chaque réceptacle d'aromatisant (110) autour d'un axe traversant le premier bout (112) et la base (113) du réceptacle d'aromatisant (110), de préférence autour d'un axe traversant substantiellement un centre du premier bout (112) et un centre de la base (113) du réceptacle d'aromatisant (110).

11. Appareil d'aromatisation selon une quelconque des revendications précédentes, comprenant en outre un système d'actionnement (118b) agencé pour actionner l'élément éjecteur (118a) du ou de chaque réceptacle d'aromatisant.

12. Appareil d'aromatisation selon une quelconque des revendications précédentes, comprenant un système de commande configuré pour commander un ou plusieurs du système d'entraînement, du système de transport, et du système d'actionnement (118b).

13. Appareil d'aromatisation selon une quelconque des revendications précédentes, comprenant en outre un distributeur d'aromatisant (25a, 25b) agencé pour distribuer une dose mesurée d'aromatisant dans au moins une position de distribution d'aromatisant pour sa réception dans le ou chaque réceptacle d'aromatisant (110) via le premier bout (112) du réceptacle d'aromatisant (110).

14. Système de préparation de portions de produit aromatisées comprenant l'appareil d'aromatisation selon une quelconque des revendications 1 à 13, et comprenant en outre :
un appareil de mise en portions d'un produit (1) agencé pour recevoir un produit en vrac, et refouler une portion dosée de produit dans au moins une position de distribution de produit pour sa réception dans le ou chaque réceptacle d'aromatisant (110), et comprenant en outre, de préférence, un appareil d'emballage agencé pour recevoir et emballer individuellement chaque portion aromatisée de produit refoulée à la position d'éjection de produit.

15. Procédé d'enrobage d'un produit avec un aromatisant, comprenant :
l'introduction d'une portion de produit dans un réceptacle d'aromatisant (110), le réceptacle d'aromatisant comprenant un premier bout ouvert (112) agencé pour recevoir une portion du produit en cours d'usage et une paroi latérale périphérique (111) définissant au moins partiellement un volume d'aromatisant s'étendant depuis le premier bout du réceptacle d'aromatisant (110), le volume d'aromatisant pour recevoir la portion de produit et la dose d'aromatisant ;
l'introduction d'une dose d'aromatisant dans le réceptacle d'aromatisant (110) ;
la rotation d'au moins la paroi latérale périphérique (111) du réceptacle d'aromatisant de façon à donner lieu au mélange de la portion de produit et de la dose d'aromatisant dans le réceptacle d'aromatisant (110) ; et
l'éjection du produit aromatisé à travers le premier bout (112) du réceptacle d'aromatisant en déplaçant un élément éjecteur (118a) à travers le volume d'aromatisant en direction du premier bout (112) ;
le réceptacle d'aromatisant (110) étant agencé de sorte que la portion de produit et la dose d'aromatisant soient maintenues dans le volume d'aromatisant au cours de la rotation de la paroi latérale périphérique (111) ;
**caractérisé en ce que** l'élément éjecteur (118a) est configuré pour se déplacer en va-et-vient d'une première position, adoptée au cours du mélange du produit et de l'aromatisant, à une deuxième position proche du premier bout (112) du réceptacle d'aromatisant (110) pour éjecter le produit aromatisé.
